(19) Europäisches Patentamt / European Patent Office / Office européen des brevets

(11) **EP 3 968 406 B1**

(12) **EUROPEAN PATENT SPECIFICATION**

(45) Date of publication and mention
of the grant of the patent:
**21.02.2024 Bulletin 2024/08**

(21) Application number: **20850162.7**

(22) Date of filing: **24.07.2020**

(51) International Patent Classification (IPC):
$H01M\ 4/134^{(2010.01)}$    $H01M\ 4/133^{(2010.01)}$
$H01M\ 4/131^{(2010.01)}$    $H01M\ 4/36^{(2006.01)}$
$H01M\ 4/587^{(2010.01)}$    $H01M\ 4/48^{(2010.01)}$
$H01M\ 4/38^{(2006.01)}$    $H01M\ 4/62^{(2006.01)}$
$H01M\ 4/139^{(2010.01)}$    $H01M\ 10/052^{(2010.01)}$
$H01M\ 4/1395^{(2010.01)}$

(52) Cooperative Patent Classification (CPC):
H01M 10/052; H01M 4/131; H01M 4/133;
H01M 4/134; H01M 4/1395; H01M 4/364;
H01M 4/386; H01M 4/483; H01M 4/587;
H01M 4/625; H01M 2004/027; Y02E 60/10

(86) International application number:
**PCT/KR2020/009793**

(87) International publication number:
**WO 2021/025349 (11.02.2021 Gazette 2021/06)**

(54) **NEGATIVE ELECTRODE, METHOD OF PRODUCING THE SAME, AND SECONDARY BATTERY COMPRISING THE SAME**

NEGATIVE ELEKTRODE, VERFAHREN ZU IHRER HERSTELLUNG UND SEKUNDÄRBATTERIE MIT DIESER ELEKTRODE

ÉLECTRODE NÉGATIVE, PROCÉDÉ POUR SA FABRICATION ET BATTERIE SECONDAIRE LA CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019 KR 20190095020**

(43) Date of publication of application:
**16.03.2022 Bulletin 2022/11**

(73) Proprietor: **LG Energy Solution, Ltd.**
**Seoul 07335 (KR)**

(72) Inventors:
• **OH, Il Geun**
**Daejeon 34122 (KR)**
• **KIM, Je Young**
**Daejeon 34122 (KR)**
• **LEE, Yong Ju**
**Daejeon 34122 (KR)**
• **YOO, Jung Woo**
**Daejeon 34122 (KR)**
• **SHIN, Sun Young**
**Daejeon 34122 (KR)**
• **KIM, Ye Lin**
**Daejeon 34122 (KR)**
• **KIM, Tae Gon**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20060 095 367    KR-A- 20100 062 297
KR-A- 20150 121 694    KR-A- 20150 121 694
KR-A- 20160 033 638    KR-A- 20160 073 822
US-A1- 2017 047 584    US-A1- 2017 092 939

**Description**

[Technical Field]

Cross-Reference to Related Application

This application claims priority to and the benefit of Korean Patent Application No. 10-2019-0095020, filed on August 5, 2019.

Technical Field

The present invention relates to a negative electrode, a method of producing the same, and a secondary battery comprising the same.

[Background Art]

Recently, in response to the rapid spread of electronic devices using batteries, such as mobile phones, notebook computers, and electric vehicles, demand for secondary batteries having a small size, a light weight, and relatively high capacity is rapidly increasing. In particular, lithium secondary batteries have been in the spotlight as a driving power source for portable devices due to having a light weight and high energy density. Accordingly, research and development efforts for improving the performance of lithium secondary batteries have been continuously made.

The lithium secondary battery generally comprises a positive electrode, a negative electrode, a separator interposed between the positive electrode and the negative electrode, an electrolyte, an organic solvent, and the like. In addition, in the positive electrode and the negative electrode, an active material layer comprising a positive electrode active material or a negative electrode active material may be formed on a current collector. In general, lithium-containing metal oxides such as $LiCoO_2$, $LiMn_2O_4$, and the like are used as positive electrode active materials in the positive electrode, and carbon-based active materials, silicon-based active materials, and the like are used as negative electrode active materials in the negative electrode.

Among the negative electrode active materials, silicon-based active materials have attracted great attention in that the capacity thereof is about 10 times higher than that of carbon-based active materials and have an advantage in which even a thin electrode is capable of realizing high energy density due to their high capacity. However, the silicon-based negative active materials have not been commonly used due to having a problem in which volumetric expansion occurs due to charging and discharging, active material particles are cracked/damaged by the volumetric expansion, and accordingly, lifetime characteristics are degraded.

In particular, in the case of the silicon-based active materials, the volumetric expansion/contraction that occurs due to charging and discharging leads to electrical disconnection between active materials, and thus lithium may not be smoothly intercalated/deintercalated into/from the silicon-based active materials, causing rapid degradation of the lifetime of the silicon-based active materials.

Therefore, there is a need to develop a secondary battery which has improved lifetime characteristics while realizing high capacity and high energy density of the silicon-based active material.

Korean Unexamined Patent Publication No. 10-2017-0074030 relates to a negative electrode active material for a lithium secondary battery, a method of preparing the same, and a lithium secondary battery comprising the same and discloses a negative electrode active material comprising a porous silicon-carbon composite, but there is a limitation in solving the above-described problems.

KR 2015 0121694 A describes a negative electrode comprising a silicon (Si) alloy, a graphite, SWCNT, a thickener, and a binder (SBR). [Prior-Art Documents]

[Patent Documents]

Korean Unexamined Patent Publication No. 10-2017-0074030

[Disclosure]

[Technical Problem]

The present invention is directed to providing a negative electrode in which both a silicon-based active material and a carbon-based active material are used, wherein a specific amount of single-walled carbon nanotube aggregates is used and thus electrical connection is capable of being maintained between active materials even when volume expansion/contraction occurs due to charging and discharging of the active material and lifetime characteristics of a negative electrode and a secondary battery are improved.

The present invention is also directed to providing a method of producing the above-described negative electrode.

The present invention is also directed to providing a secondary battery comprising the above-described negative electrode.

[Technical Solution]

One aspect of the present invention provides a negative electrode which comprises: a negative electrode current collector; and a negative electrode active material layer formed on the negative electrode current collector and comprising a negative electrode active material containing a silicon-based active material comprising at least one selected from the group consisting of a silicon-based oxide and a silicon-carbon composite, and a carbon-based active material, a binder, and single-walled carbon nanotube aggregates, wherein the single-walled carbon nanotube aggregates are comprised at 0.05 parts by weight to 0.37 parts by weight based on 100 parts by weight of the silicon-based active material in the negative electrode active material layer, as further defined in the claims.

Another aspect of the present invention provides a method of producing a negative electrode, which comprises the steps of: adding and mixing a negative electrode active material comprising a silicon-based active material and a carbon-based active material, a binder, single-walled carbon nanotube aggregates, and first carboxymethylcellulose having a weight-average molecular weight of 800,000 to 1,600,000 to a first solvent and preparing a negative electrode slurry; and coating a negative electrode current collector with the negative electrode slurry and drying the negative electrode slurry, wherein the single-walled carbon nanotube aggregates are mixed at 0.05 to 0.37 parts by weight based on 100 parts by weight of the silicon-based active material.

Still another aspect of the present invention provides a secondary battery which comprises: the negative electrode described above; a separator interposed between the negative electrode and a positive electrode; and an electrolyte.

[Advantageous Effects]

A negative electrode according to the present invention comprises a negative electrode active material comprising a silicon-based active material and a carbon-based active material and comprises a specific amount of single-walled carbon nanotube aggregates. The specific amount of the single-walled carbon nanotube aggregates can form a stable conductive network in a negative electrode active material layer due to its long fiber length and high conductivity, and thus the electrical connection between active materials can be maintained even when the negative electrode active material is volumetrically expanded/contracted due to charging and discharging, resulting in an improvement in lifetime characteristics of the negative electrode and a secondary battery.

[Modes of the Invention]

The terminology provided herein is merely used for the purpose of describing particular embodiments, and is not intended to be limiting of the present invention. The singular forms "a," "an," and "the" are intended to comprise the plural forms as well, unless the context clearly indicates otherwise.

It should be understood that the terms "include", "including", "comprise", "comprising", "have", and/or "having", when used herein, specify the presence of stated features, integers, steps, operations, elements, components and/or combinations thereof, but do not preclude the presence or addition of one or more other features, integers, steps, operations, elements, components and/or combinations thereof.

In the present invention, an average particle diameter ($D_{50}$) may be defined as a particle diameter corresponding to 50% of the cumulative volume in a particle diameter distribution curve. The average particle diameter ($D_{50}$) may be measured using, for example, a laser diffraction method. The laser diffraction method generally allows the measurement of a particle diameter ranging from a submicron level to several millimeters and may produce a result having high reproducibility and high resolution.

Hereinafter, the present invention will be described in detail.

**<Negative electrode>**

The present invention provides a negative electrode, specifically, a negative electrode for a lithium secondary battery.

The negative electrode according to the present invention comprises: a negative electrode current collector; and a negative electrode active material layer formed on the negative electrode current collector and comprising a negative electrode active material containing a silicon-based active material which comprises at least one selected from the group consisting of a silicon-based oxide and a silicon-carbon composite, and a carbon-based active material, a binder, and single-walled carbon nanotube (SWCNT) aggregates, and the SWCNT aggregates are comprised at 0.05 parts by weight to 0.37 parts by weight based on 100 parts by weight of the silicon-based active material in the negative electrode active material layer.

Generally, the negative electrode active material is volumetrically expanded/contracted due to charging and discharging of the negative electrode active material, and accordingly, an electrical short circuit occurs between the active materials in contact with each other, causing rapid degradation of the lifetime of the negative electrode. In the negative electrode according to the present invention, when using the negative electrode active material comprising the silicon-based active material and the carbon-based active material as a component, a specific amount of SWCNT aggregates is used. The SWCNT aggregates may have a long fiber length and high conductivity and may form a conductive network that allows the electrical connection between the active materials to be maintained in the negative electrode active material layer. Accordingly, the negative electrode according to the present invention may continue to maintain the electrical connection between the silicon-based active material and/or the carbon-based active material even when the negative electrode active material is volumetrically expanded/contracted due to the conductive network formed by the SWCNT aggregates, resulting in a significant improvement in lifetime characteristics of the negative electrode and the secondary battery.

In addition, since the negative electrode according to the present invention comprises a specific amount of SWCNT aggregates in the negative electrode active material layer, it is possible to stably and sufficiently form a conductive network, thereby improving the lifetime characteristics of the negative electrode, and it is possible to prevent efficiency degradation due to side reactions caused by excessive addition of the SWCNT aggregates.

The negative electrode current collector is not particularly limited as long as it does not cause a chemical change in the battery and has high conductivity. Specifically, as the negative electrode current collector, copper, stainless steel, aluminum, nickel, titanium, calcined carbon, copper or stainless steel whose surface has been treated with carbon, nickel, titanium, silver, or the like, an aluminum-cadmium alloy, or the like may be used.

The negative electrode current collector may typically have a thickness of 3 to 500 $\mu$m.

The negative electrode current collector may have fine irregularities formed on a surface thereof to increase the adhesion of the negative electrode active material. For example, the negative electrode current collector may be used in any of various forms such as a film, a sheet, a foil, a net, a porous material, a foam, a non-woven fabric, and the like.

The negative electrode active material layer is formed on the negative electrode current collector.

The negative electrode active material layer comprises: a negative electrode active material comprising a silicon-based active material and a carbon-based active material; a negative electrode binder; and SWCNT aggregates.

The negative electrode active material may comprise the silicon-based active material and the carbon-based active material and may improve both the capacity characteristics and cycle characteristics of the negative electrode to excellent levels.

The silicon-based active material comprises at least one selected from the group consisting of a silicon-based oxide and a silicon-carbon composite in view of minimizing or appropriately accommodating volume expansion/contraction caused by charging and discharging of silicon.

The silicon-based oxide may be a compound represented by Chemical Formula 1 below.

$$[\text{Chemical Formula 1}] \qquad M_xSiO_y$$

In Chemical Formula 1, M denotes at least one selected from the group consisting of Li, Mg, and Al, and $0 \leq x \leq 4$ and $0 \leq y < 2$ may be satisfied.

In Chemical Formula 1, $SiO_2$ (in the case of x=0 and y=2 in Chemical Formula 1) does not react with lithium ions and thus not store lithium. Therefore, it is preferable that y be within the above-described range. Specifically, in Chemical Formula 1, y may satisfy $0.5 \leq y \leq 1.5$ in view of ensuring the structural stability of the active material.

In Chemical Formula 1, M may be comprised in view of reducing a ratio of the irreversible phase of the silicon-based oxide (e.g., $SiO_2$) and increasing the efficiency of the active material and may comprise at least one selected from the group consisting of Li, Mg, and Al and preferably comprises at least one selected from the group consisting of Li and Mg.

The silicon-carbon composite may be formed by mechanically alloying a carbon-based material with silicon (Si). For example, the silicon-carbon composite may be a composite comprising a plurality of silicon particles and a carbon-based material dispersed between the plurality of silicon particles, or may comprise silicon and a carbon-based material formed on a part or entirety of the surface of the silicon. In such a silicon-carbon composite, a carbon-based material may be dispersed in silicon having low conductivity and thus high conductivity may be imparted to the composite.

The carbon-based material may be at least one selected from the group consisting of amorphous carbon and crystalline carbon. The amorphous carbon may be prepared by heat treatment of coal tar pitch, petroleum pitch, various

4

types of organic materials, and the like. The crystalline carbon may be at least one selected from the group consisting of graphite, soft carbon, hard carbon, carbon black, and mesocarbon microbeads (MCMB). Preferably, the carbon-based material may be at least one selected from the group consisting of amorphous carbon, natural graphite, and artificial graphite.

The silicon-carbon composite may comprise silicon and a carbon-based material in a weight ratio of 20:80 to 65:35, and preferably, 30:70 to 50:50. It is preferable that the weight ratio be within the above-described range in view of adequately accommodating volume expansion caused by charging and discharging of silicon and preventing initial efficiency degradation caused by an excessive amount of the carbon-based material.

The silicon-based active material may have an average particle diameter ($D_{50}$) of 1 $\mu$m to 15 $\mu$m, and preferably, 3 $\mu$m to 11 $\mu$m, in view of ensuring the structural stability of the active material during charging and discharging, further maintaining the electrical connection when used in combination with the SWCNT aggregates, preventing a problem of increasing a level of volume expansion/contraction as the particle diameter becomes excessively large, and preventing a problem of degrading initial efficiency due to an excessively low particle diameter.

The carbon-based active material may impart excellent cycle characteristics or battery lifetime performance to the negative electrode or secondary battery according to the present invention.

Specifically, the carbon-based active material may comprise at least one selected from the group consisting of artificial graphite, natural graphite, hard carbon, soft carbon, carbon black, acetylene black, Ketjen black, Super P, graphene, and fibrous carbon and preferably comprises at least one selected from the group consisting of artificial graphite and natural graphite.

The carbon-based active material may have an average particle diameter ($D_{50}$) of 5 $\mu$m to 35 $\mu$m, and preferably, 15 $\mu$m to 25 $\mu$m, in view of ensuring structural stability during charging and discharging and reducing side reactions with an electrolyte solution.

Specifically, the negative electrode active material preferably uses both the silicon-based active material and the carbon-based active material in view of improving both capacity characteristics and cycle characteristics. Specifically, the negative electrode active material comprises the silicon-based active material and the carbon-based active material in a weight ratio of 1:99 to 30:70, and preferably, 10:90 to 20:80. It is preferable that the weight ratio be within the above-described range in view of improving both capacity characteristics and cycle characteristics. In addition, when the weight ratio is within the above-described range, the SWCNT aggregates to be described below may form an appropriate level of conductive network in the negative electrode active material layer, thereby improving both lifetime characteristics and efficiency characteristics.

The negative electrode active material may be comprised at 70 wt% to 99 wt%, and preferably, 80 wt% to 98 wt%, in the negative electrode active material layer.

The binder is used to improve the performance of the battery by improving adhesion between the negative electrode active material layer and the negative electrode current collector, and, for example, may comprise at least one selected from the group consisting of a polyvinylidene fluoride hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropylcellulose, recycled cellulose, polyvinylpyrrolidone, polytetrafluoroethylene, polyethylene, propylene polymer, polyacrylic acid, an ethylene-propylene-diene monomer (EPDM), a sulfonated EPDM, styrene-butadiene rubber (SBR), fluorine rubber, and materials in which hydrogen is substituted with Li, Na, Ca, or the like, or may comprise various copolymers thereof.

The negative electrode binder may be comprised at 0.5 wt% to 10 wt%, and preferably, 0.7 wt% to 5 wt%, in the negative electrode active material layer.

The SWCNT aggregate may be a secondary structure formed by aggregating two or more single-walled carbon nanotube monomers (hereinafter, referred to as "SWCNT monomers"). Specifically, the SWCNT aggregate may be a secondary structure formed by aggregating all or part of two or more SWCNT monomers to form a bundle type.

The SWCNT monomer is a type of carbon nanotube having a single cylindrical wall, and has a fiber form. The SWCNT monomer may have a graphite sheet in the form of a cylinder having a nano-sized diameter, and may have a $sp^2$ bonding structure. The SWCNT monomer may have a long fiber length because no breaking occurs when a tube is grown, and may have a high degree of graphitization and conductivity as compared to a multi-wall carbon nanotube (MWCNT). However, when the SWCNT monomer is comprised in the negative electrode active material layer in an independent form, there is a problem in that, even when a conductive network that aids the electrical connection between the negative electrode active materials is formed in the negative electrode, the conductive network may be easily disconnected by the electrode rolling process for electrode production or the conductive network may not be smoothly maintained due to volume expansion caused by charging and discharging of the silicon-based active material.

Accordingly, the negative electrode according to the present invention comprises SWCNT aggregates having a long fiber length and excellent conductivity in the negative electrode active material layer, thereby forming a stable conductive network between the negative electrode active materials in the negative electrode active material layer. Therefore, even when the negative electrode active material, in particular, the silicon-based active material, is volumetrically expanded/contracted during charging and discharging, the SWCNT aggregates may maintain the conductive network between the negative electrode active materials, and thus the electrical short circuit caused by charging and discharging may be prevented, intercalation/deintercalation of lithium may be smoothly maintained, and the lifetime characteristics of the negative electrode or secondary battery may be improved to a significantly high level. In addition, in the present invention, a SWCNT aggregate, in which SWCNT monomers are aggregated, is used, and it is preferable that a stable conductive network may be formed in the negative electrode as compared to the case of using the SWCNT monomer in an independent form.

The SWCNT aggregates are comprised at 0.05 parts by weight to 0.37 parts by weight based on 100 parts by weight of the silicon-based active material in the negative electrode active material layer.

When the SWCNT aggregates are comprised at less than 0.05 parts by weight based on 100 parts by weight of the silicon-based active material in the negative electrode active material layer, it is not possible to sufficiently prevent the electrical short circuit occurring due to volume expansion/contraction during charging and discharging of the silicon-based active material, and a conductive network may not be sufficiently formed so that the lifetime characteristics of the negative electrode may be degraded. When the SWCNT aggregates are comprised at greater than 0.37 parts by weight based on 100 parts by weight of the silicon-based active material in the negative electrode active material layer, aggregation occurring due to excessive addition of SWCNT aggregates and intensification of side reactions with the electrolyte solution due to an increase in active sites may result in efficiency degradation and lifetime performance degradation.

Preferably, the SWCNT aggregates may be comprised at 0.12 to 0.25 parts by weight based on 100 parts by weight of the silicon-based active material in the negative electrode active material layer. It is preferable that the content be within the above-described range in view of sufficiently and smoothly forming the conductive network between the negative electrode active materials and preventing efficiency degradation and lifetime performance degradation due to the side reactions with the electrolyte solution.

The SWCNT aggregates may have an average diameter of 3 nm to 20 nm, preferably, 5 nm to 10 nm, and more preferably, 7.5 nm to 9.5 nm. It is preferable that the average diameter be within the above-described range in view of stably forming the conductive network in the negative electrode by the SWCNT aggregates in which the SWCNT monomers are appropriately aggregated. In addition, in view of the above-described content of the SWCNT aggregates, when the SWCNT aggregates have an average diameter within the above-described range, a sufficient amount of SWCNT aggregates may be present in the negative electrode and thus a uniform and sufficient conductive network may be formed in the negative electrode.

In this specification, the average diameter of the SWCNT aggregates is measured as follows. A solution (comprising a solid content of 1 wt% based on the total weight of the solution) obtained by adding SWCNT aggregates and carboxymethylcellulose (CMC) in a weight ratio of 40:60 to water is diluted 1,000x in water. One drop of the diluted solution is dropped on a transmission electron microscopy (TEM) grid, and the TEM grid is dried. The dried TEM grid is observed via TEM equipment (H-7650 manufactured by Hitachi High-Tech Corporation), and the average diameter of the SWCNT aggregates is measured.

The SWCNT aggregates may have an average length of 3 $\mu$m to 20 $\mu$m, preferably, 5 $\mu$m to 15 $\mu$m, and more preferably, 7.8 $\mu$m to 8.8 $\mu$m. It is preferable that the average length of the SWCNT aggregates be within the above-described range in view of improving the electrical connection between the active materials due to the long fiber length of the SWCNT aggregate. In addition, in view of the above-described content of the SWCNT aggregates, when the SWCNT aggregates have an average diameter within the above-described range, a sufficient amount of SWCNT aggregates may be present in the negative electrode and thus a uniform and sufficient conductive network may be formed in the negative electrode.

In this specification, the average length of the SWCNT aggregates is measured as follows. A solution (comprising a solid content of 1 wt% based on the total weight of the solution) obtained by adding SWCNT aggregates and carboxymethylcellulose (CMC) in a weight ratio of 40:60 to water is diluted 1,000x in water. Afterward, 20 ml of the diluted solution is filtered through a filter, and the filter through which the SWCNT aggregates are filtered is dried. One hundred scanning electron microscope (SEM) images are taken of the dried filter, the length of the SWCNT aggregates is measured using an ImageJ program, and an average value of the measured length is defined as the average length of the SWCNT aggregates.

The SWCNT aggregates may have an average aspect ratio of 300 to 1,500, preferably, 700 to 1,200, and more preferably, 900 to 1,020. It is preferable that the average aspect ratio of the SWCNT aggregates be within the above-described range in view of stably maintaining the conductive network by the SWCNT aggregates without being damaged by rolling of the electrode or volume expansion of the negative electrode active material. In addition, in view of the above-described content of the SWCNT aggregates, when the SWCNT aggregates have an average aspect ratio within the above-described range, a sufficient amount of SWCNT aggregates may be present in the negative electrode and thus a uniform and sufficient conductive network may be formed in the negative electrode. The average aspect ratio of the SWCNT aggregates may be defined as "the average length of the SWCNT aggregates/the average diameter of the SWCNT aggregates."

The SWCNT aggregates may be prepared by aggregating or agglomeration of two or more SWCNT monomers. Specifically, the SWCNT aggregates may be prepared by adding and mixing two or more SWCNT monomers to a conductive material solution comprising a thickener and a solvent (e.g., distilled water). In particular, when carboxymethylcellulose having a weight-average molecular weight of 350,000 to 750,000, and preferably, 450,000 to 600,000, is used as the thickener, it is more preferable to realize the SWCNT aggregates that satisfy the above-described effect. The conductive material solution comprising the SWCNT aggregates may be added to a negative electrode slurry used in producing the negative electrode active material layer.

The SWCNT aggregates may be comprised at 0.008 wt% to 0.055 wt%, and preferably, 0.015 wt% to 0.035 wt%, in the negative electrode active material layer. It is preferable that the content be within the above-described range in view of forming a stable conductive network by the SWCNT aggregates being evenly dispersed in the negative electrode and preventing the electrical short circuit between the negative electrode active materials.

The negative electrode active material layer may further comprise a thickener.

As the thickener, carboxymethylcellulose or the like may be used, and specifically, two or more types of carboxymethylcellulose having different weight-average molecular weights may be used. For example, the thickener may comprise at least one from among first carboxymethylcellulose having a weight-average molecular weight of 800,000 to 1,600,000 and second carboxymethylcellulose having a weight-average molecular weight of 350,000 to 750,000.

The thickener may comprise first carboxymethylcellulose having a weight-average molecular weight of 800,000 to 1,600,000 and second carboxymethylcellulose having a weight-average molecular weight of 350,000 to 750,000. Since the first carboxymethylcellulose and the second carboxymethylcellulose having different molecular weights are used, the dispersibility of the negative electrode active material, the binder, the SWCNT aggregates, and the like in the negative electrode may be improved to a high level. Specifically, the second carboxymethylcellulose may allow the SWCNT aggregates in which the SWCNT monomers are aggregated to be formed at an appropriate level and allow the SWCNT aggregates to be evenly dispersed in the negative electrode, and thus a stable conductive network may be formed. In addition, the first carboxymethylcellulose may allow other components, such as the negative electrode active material, the binder, and the like in addition to the SWCNT aggregates, to be smoothly dispersed in the negative electrode.

The first carboxymethylcellulose may have a weight-average molecular weight of 800,000 to 1,600,000, preferably, 900,000 to 1,500,000, and more preferably, 1,000,000 to 1,200,000. When the weight-average molecular weight of the first carboxymethylcellulose is within the above-described range, the dispersibility and coating properties of the components in the negative electrode active material layer may be improved to an excellent level. In addition, the first carboxymethylcellulose having the weight-average molecular weight within the above-described range may allow the negative electrode slurry for forming the negative active material layer to have an appropriate level of viscosity, and thus is advantageous in view of improving processability.

The second carboxymethylcellulose may have a weight-average molecular weight of 350,000 to 750,000, and preferably, 450,000 to 600,000. It is preferable that the weight-average molecular weight of the second carboxymethylcellulose be within the above-described range in view of enabling the formation of the SWCNT aggregates that are advantageous for forming the conductive network by the SWCNT monomers being aggregated at an appropriate level, evenly dispersing the SWCNT aggregates in the negative electrode active material layer, and improving the conductivity and lifetime characteristics of the negative electrode active material.

The first carboxymethylcellulose and the second carboxymethylcellulose may be comprised in a weight ratio of 12:1 to 100:1, and preferably, 20:1 to 50:1, in the negative electrode active material layer. The negative electrode active material, the binder, and the SWCNT aggregates in the negative electrode active material layer may be dispersed at a high level and the SWCNT aggregates may be formed to have an appropriate degree of aggregation, thereby forming a stable and sufficient conductive network.

The thickener may be comprised at 0.5 wt% to 5 wt%, and preferably, 1.5 wt% to 3.5 wt%, in the negative electrode active material layer. It is preferable that the content be within the above-described range in view of evenly dispersing the components in the negative electrode active material layer.

**<Method of producing negative electrode>**

In addition, the present invention provides a method of producing a negative electrode, specifically, a method of producing a negative electrode for a lithium secondary battery. The method of producing the negative electrode may be the method of producing the negative electrode described above.

Specifically, the method of producing the negative electrode according to the present invention comprises the steps of: adding and mixing a negative electrode active material comprising a silicon-based active material and a carbon-based active material, a binder, SWCNT aggregates, and first carboxymethylcellulose having a weight-average molecular weight of 800,000 to 1,600,000 to a first solvent and preparing a negative electrode slurry; and coating a negative electrode current collector with the negative electrode slurry and drying the negative electrode slurry, wherein the SWCNT aggregates are mixed at 0.05 to 0.37 parts by weight based on 100 parts by weight of the silicon-based active material.

In the method of producing the negative electrode according to the present invention, the negative electrode active material comprising the silicon-based active material and the carbon-based active material is used together with a specific amount of SWCNT aggregates, and a conductive network that maintains electrical connection is formed even when the SWCNT aggregates are volumetrically expanded/contracted due to charging and discharging of the negative electrode active material and thus the lifetime characteristics of the negative electrode may be improved.

The method of producing the negative electrode according to the present invention comprises adding and mixing a negative electrode active material comprising a silicon-based active material and a carbon-based active material, a negative electrode binder, SWCNT aggregates, and first carboxymethylcellulose having a weight-average molecular weight of 800,000 to 1,600,000 to a first solvent and preparing a negative electrode slurry.

The negative electrode active material comprises the silicon-based active material and the carbon-based active material. Specifically, in view of improving both capacity characteristics and cycle characteristics, the negative electrode active material may comprise the silicon-based active material and the carbon-based active material in a weight ratio of 1:99 to 30:70, and preferably, 10:90 to 20:80.

The negative electrode active material may be comprised at 70 wt% to 99 wt%, and preferably, 80 wt% to 98 wt%, based on a total weight of a solid content of the negative electrode slurry.

Other characteristics of the negative electrode active material may be the same as those of the negative electrode active material comprised in the above-described negative electrode.

The binder may be comprised at 0.5 wt% to 10 wt%, and preferably, 0.7 wt% to 5 wt%, based on the total weight of the solid content of the negative electrode slurry.

Other characteristics of the binder may be the same as those of the binder comprised in the above-described negative electrode.

The SWCNT aggregate may be a secondary structure formed by aggregating two or more SWCNT monomers (hereinafter, referred to as the "SWCNT monomers").

The SWCNT aggregates are added and mixed at 0.05 to 0.37 parts by weight, and preferably, 0.12 to 0.25 parts by weight, based on 100 parts by weight of the silicon-based active material, to the first solvent. It is preferable that the content of the SWCNT aggregates be within the above-described range in view of sufficiently and smoothly forming, by the SWCNT aggregates, the conductive network between the negative electrode active materials and preventing efficiency degradation and lifetime performance degradation due to the side reactions with the electrolyte solution.

The SWCNT aggregates may be prepared in the form of aggregates by pre-aggregating and dispersing the SWCNT monomers in the conductive material solution and then added to the first solvent. Specifically, the SWCNT aggregates may be prepared by mixing the SWCNT monomers with a conductive material solution comprising second carboxymethylcellulose having a weight-average molecular weight of 350,000 to 750,000 and a second solvent, and the conductive material solution may be added to the first solvent. The SWCNT monomers may be aggregated at an appropriate level in the conductive material solution to form SWCNT aggregates and at the same time, dispersed in the conductive material solution. When the SWCNT aggregates are added to the first solvent in the form of the conductive material solution, SWCNT aggregates having a desired degree of aggregation and length may be formed, and thus the conductive network that aids the electrical connection between the active materials may be formed at a sufficient and stable level.

The second carboxymethylcellulose may have a weight-average molecular weight of 350,000 to 750,000, and preferably, 450,000 to 600,000. The second carboxymethylcellulose having the weight-average molecular weight in the above-described range may allow the SWCNT monomer to be aggregated at an appropriate level and allow the formed SWCNT aggregates to be smoothly dispersed in the solution. The SWCNT aggregates formed in the above manner may form a conductive network having a high level of lifetime-improving effect in the negative electrode active material layer.

The mixing of the SWCNT monomer and the conductive material solution may be performed by, for example, ultrasonic treatment. The above-described ultrasonic treatment may be performed for 6 to 18 hours for smooth formation of the SWCNT aggregates and dispersion in the solution.

The SWCNT monomers and the second carboxymethylcellulose may be mixed in a weight ratio of 20:80 to 60:40, and preferably, 30:70 to 50:50. It is preferable that the weight ratio be within the above-described range in view of aggregating the SWCNT monomers at an appropriate level and smoothly dispersing the SWCNT aggregates formed therefrom in the conductive material solution.

The SWCNT monomers may be added at 0.2 wt% to 1 wt%, and preferably, 0.3 wt% to 0.6 wt%, based on a total weight of a solid content of the conductive material solution. It is preferable that the content be within the above-described range in view of evenly dispersing the SWCNT aggregates formed from the SWCNT monomers in the conductive material solution and mixing the SWCNT aggregates and the negative electrode active materials at a constant level when the negative electrode slurry is prepared.

In the conductive material solution, the second solvent may comprise at least one selected from the group consisting of distilled water, ethanol, methanol, and isopropyl alcohol and preferably comprises distilled water.

The conductive material solution may be added to the first solvent. That is, the conductive material solution may be used as a pre-dispersion solution for preparing the SWCNT aggregates, and the conductive material solution may be added as it is in the negative electrode slurry to become a component of the negative electrode slurry.

The solid content of the conductive material solution may be 0.5 wt% to 2 wt%, and preferably, 0.6 wt% to 1.5 wt%, based on a total weight of the solution. It is preferable that the content be within the above-described range in view of achieving viscosity suitable for forming an active material layer even when the conductive material solution is added into the negative electrode slurry.

The SWCNT aggregates may be comprised at 0.008 wt% to 0.055 wt%, and preferably, 0.015 wt% to 0.035 wt%, based on the total weight of the solid content of the negative electrode slurry. It is preferable that the content be within the above-described range in view of forming the conductive network by the SWCNT aggregates at a constant level in the negative electrode when the negative electrode is produced by the SWCNT aggregates being evenly dispersed in the negative electrode slurry, and preventing the electrical short circuit between the active materials to a high level.

An average diameter, average length, average aspect ratio, and other characteristics of the SWCNT aggregates may be the same as those of the above-described SWCNT aggregates.

The first carboxymethylcellulose may have a weight-average molecular weight of 800,000 to 1,600,000, preferably, 900,000 to 1,500,000, and more preferably, 1,000,000 to 1,200,000. The first carboxymethylcellulose having the weight-average molecular weight range may be added to the first solvent, and thus a negative electrode slurry having an appropriate level of viscosity and coating property may be prepared and dispersibility of the negative electrode active material, the binder, and the like may be improved.

The first carboxymethylcellulose may be comprised at 0.2 wt% to 5 wt%, and preferably, 0.5 wt% to 2 wt%, based on the total weight of the solid content of the negative electrode slurry. It is preferable that the content be within the above-described range in view of further improving the coating property of the negative electrode slurry.

When the SWCNT aggregates are comprised in the conductive material solution and added to the first solvent, the first carboxymethylcellulose and the second carboxymethylcellulose may be mixed in a weight ratio of 12:1 to 100:1, and preferably, 20:1 to 50:1, in the negative electrode slurry. When the first carboxymethylcellulose and the second carboxymethylcellulose are used in the weight ratio within the above-described range, it is preferable because the formation and dispersion of the SWCNT aggregates may be smoothly achieved by the second carboxymethyl cellulose, and at the same time, the first carboxymethylcellulose may allow the components in the negative electrode slurry to be dispersed at a constant level. In addition, when the first carboxymethylcellulose and the second carboxymethylcellulose are used in the weight ratio in the above-described range, the coating property and processability of the negative electrode slurry may be further improved.

The first solvent may comprise at least one selected from the group consisting of distilled water, ethanol, methanol, and isopropyl alcohol and preferably comprises distilled water.

The solid content of the negative electrode slurry may range from 40 wt% to 60 wt%, and preferably, 45 wt% to 55 wt%. It is preferable that the content be within the above-described range in view of improving the coating property and processability of the negative electrode slurry.

The method of producing the negative electrode according to the present invention comprises coating the negative electrode current collector with the negative electrode slurry and drying the negative electrode slurry.

As the negative electrode current collector, any negative electrode current collector commonly used in a lithium secondary battery field may be used without limitation, and may be, for example, the same as the above-described negative electrode current collector.

For the coating and drying of the negative electrode slurry, any method commonly used in the lithium the secondary battery field may be used without limitation.

**<Secondary battery>**

The present invention provides a secondary battery, specifically, a lithium secondary battery, comprising the above-described negative electrode.

Specifically, the secondary battery according to the present invention comprises: the above-described negative electrode; a positive electrode disposed to face the negative electrode; a separator interposed between the negative electrode and the positive electrode; and an electrolyte.

The positive electrode may comprise a positive electrode current collector and a positive electrode active material layer formed on the positive electrode current collector.

The positive electrode current collector is not particularly limited as long as it does not cause a chemical change in the battery and has high conductivity. Specifically, as the positive electrode current collector, copper, stainless steel, aluminum, nickel, titanium, calcined carbon, copper or stainless steel whose surface has been treated with carbon, nickel, titanium, silver, or the like, an aluminum-cadmium alloy, or the like may be used.

The positive electrode current collector may typically have a thickness of 3 to 500 $\mu$m.

The positive electrode current collector may have fine irregularities formed on a surface thereof to increase the adhesion of a positive electrode active material. For example, the positive electrode current collector may be used in any of various forms such as a film, a sheet, a foil, a net, a porous material, a foam, a non-woven fabric, and the like.

The positive electrode active material layer may comprise a positive electrode active material.

The positive electrode active material may comprise a compound that enables the reversible intercalation and deintercalation of lithium, specifically, a lithium-transition metal composite oxide comprising lithium and at least one transition metal selected from the group consisting of nickel, cobalt, manganese, and aluminum, and preferably, a lithium-transition metal composite oxide comprising lithium and transition metals comprising nickel, cobalt, and manganese.

More specifically, the lithium-transition metal composite oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), a lithium-nickel-cobalt-based oxide (e.g., $LiNi_{1-Y1}Co_{Y1}O_2$ (where $0<Y1<1$), etc.), a lithium-manganese-cobalt-based oxide (e.g., $LiCo_{1-Y2}Mn_{Y2}O_2$ (where $0<Y2<1$), $LiMn_{2-z1}Co_{z1}O_4$ (where $0<Z1<2$), etc.), a lithium-nickel-manganese-cobalt-based oxide (e.g., $Li(Ni_pCo_qMn_{r1})O_2$ (where $0<p<1$, $0<q<1$, $0<r1<1$, $p+q+r1=1$), $Li(Ni_{p1}Co_{q1}Mn_{r2})O_4$ (where $0<p1<2$, $0<q1<2$, $0<r2<2$, $p1+q1+r2=2$), etc.), or a lithium-nickel-cobalt-transition metal (M) oxide (e.g., $Li(Ni_{p2}Co_{q2}Mn_{r3}M_{s2})O_2$ (where M is selected from the group consisting of Al, Fe, V, Cr, Ti, Ta, Mg, and Mo, and p2, q2, r3, and s2 are respective atomic fractions of elements which are independent of one another, and $0<p2<1$, $0<q2<1$, $0<r3<1$, $0<s2<1$, $p2+q2+r3+s2=1$), etc.), which may be used alone or in combination of two or more thereof. Among those listed above, in view of increasing the capacity characteristics and stability of the battery, the lithium-transition metal composite oxide may be $LiCoO_2$, $LiMnO_2$, $LiNiO_2$, a lithium-nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, etc.), or a lithium-nickel-cobalt-aluminum oxide (e.g., $Li(Ni_{0.8}Co_{0.15}Al_{0.05})O_2$, etc.). In addition, considering that the types and content ratio of elements constituting the lithium-transition metal composite oxide are controlled to realize a remarkable improvement effect, the lithium-transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like, which may be used alone or in combination of two or more thereof.

The positive electrode active material may be comprised at 80 wt% to 99 wt%, and preferably, 92 wt% to 98.5 wt% in the positive electrode active material layer in consideration of sufficiently exhibiting the capacity of the positive electrode active material.

The positive electrode active material layer may further comprise a binder and/or a conductive material in addition to the above-described positive electrode active material.

The binder serves to assist bonding between an active material and a conductive material and bonding to a current collector. Specifically, the binder may comprise at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, styrene butadiene rubber, and fluorine rubber and preferably comprises polyvinylidene fluoride.

The binder may be comprised at 1 wt% to 20 wt%, and preferably, 1.2 wt% to 10 wt% in the positive electrode active material layer in view of sufficiently ensuring bonding of the positive electrode active material to other components.

The conductive material may be used to impart conductivity to a secondary battery and improve the conductivity thereof and is not particularly limited as long as it does not cause a chemical change and has conductivity. Specifically, the conductive material may comprise at least one selected from the group consisting of graphite such as natural graphite, artificial graphite, or the like; a carbon black-based material such as carbon black, acetylene black, Ketjen black, channel black, furnace black, lamp black, thermal black, or the like; a conductive fiber such as carbon fibers, metal fibers, or the like; a conductive tube such as carbon nanotubes or the like; fluorocarbon; a metal powder such as aluminum powder, nickel powder, or the like; a conductive whisker consisting of zinc oxide, potassium titanate, or the like; a conductive metal oxide such as titanium oxide or the like; and a polyphenylene derivative and preferably comprises carbon black in view of improving conductivity.

The conductive material may be comprised at 1 wt% to 20 wt%, and preferably, 1.2 wt% to 10 wt% in the positive electrode active material layer in view of sufficiently ensuring electrical conductivity.

The positive electrode active material layer may have a thickness of 30 $\mu$m to 400 $\mu$m, and preferably, 50 $\mu$m to 110 $\mu$m.

The positive electrode may be produced by applying a positive electrode slurry comprising a positive electrode active material, and optionally, the binder, the conductive material, and a solvent for forming a positive electrode slurry onto the positive electrode current collector, followed by drying and roll pressing.

The solvent for forming a positive electrode slurry may comprise an organic solvent such as N-methyl-2-pyrrolidone (NMP) or the like and may be used in an amount suitable for achieving preferable viscosity when the positive electrode active material, and optionally, the binder and the conductive material are comprised. For example, the solvent for forming a positive electrode slurry may be comprised in the positive electrode slurry so that the amount of a solid content comprising the positive electrode active material, and optionally, the binder and the conductive material ranges from 50 wt% to 95 wt%, and preferably, 70 wt% to 90 wt%.

The separator serves to separate the negative electrode and the positive electrode and provide a passage for lithium ion migration, and any separator used as a separator in a typical lithium secondary battery may be used without limitation. In particular, a separator that exhibits low resistance to the migration of ions of an electrolyte and has an excellent electrolyte impregnation ability is preferred. Specifically, as the separator, a porous polymer film, for example, a porous polymer film made of a polyolefin-based polymer such as an ethylene polymer, a propylene polymer, an ethylene/butene copolymer, an ethylene/hexene copolymer, an ethylene/methacrylate copolymer, or the like or a stacked structure having two or more layers thereof may be used. In addition, as the separator, a common porous non-woven fabric, for example, a non-woven fabric made of high-melting-point glass fiber, polyethylene terephthalate fiber, or the like may be used. Additionally, in order to ensure heat resistance or mechanical strength, a coated separator which comprises a ceramic component or polymer material and optionally has a single-layer or multi-layer structure may be used as the separator.

Examples of the electrolyte used in the present invention comprise an organic liquid electrolyte, an inorganic liquid electrolyte, a solid polymer electrolyte, a gel-type polymer electrolyte, an inorganic solid electrolyte, a molten-type inorganic electrolyte, and the like that are usable in the production of a secondary battery, but the present invention is not limited thereto.

Specifically, the electrolyte may comprise an organic solvent and a lithium salt.

As the organic solvent, any organic solvent may be used without particular limitation as long as it may serve as a medium through which ions involved in an electrochemical reaction of the battery can migrate. Specifically, the organic solvent may be: an ester-based solvent such as methyl acetate, ethyl acetate, $\gamma$-butyrolactone, $\varepsilon$-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like; an alcohol-based solvent such as ethyl alcohol, isopropyl alcohol, or the like; a nitrile such as R-CN (R is a C2-C20 hydrocarbon group with a linear, branched or cyclic structure and may comprise a double-bond, an aromatic ring or an ether linkage) or the like; an amide such as dimethylformamide or the like; dioxolane such as 1,3-dioxolane or the like; or sulfolane. Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of the battery, is more preferred. In this case, when a mixture obtained by mixing the cyclic carbonate-based compound and the linear carbonate-based compound in a volume ratio of about 1:1 to about 1:9 is used, excellent electrolyte solution performance may be exhibited.

As the lithium salt, any compound may be used without particular limitation as long as it may provide lithium ions used in the lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration of 0.1 to 2.0 M. When the concentration of the lithium salt is within the above-described range, the electrolyte has appropriate levels of conductivity and viscosity, and thus excellent electrolyte performance can be exhibited, and lithium ions can effectively migrate.

The secondary battery may be produced by a conventional method of producing a secondary battery, that is, by interposing a separator between the above-described negative electrode and positive electrode and injecting an electrolyte solution.

The secondary battery according to the present invention is useful in the field of portable devices such as mobile phones, notebook computers, digital cameras, and the like and electric vehicles such as hybrid electric vehicles (HEVs) and the like and is preferably used, particularly, as a battery constituting a medium-to-large-sized battery module. Therefore, the present invention also provides a medium-to-large-sized battery module comprising the above-described secondary battery as a unit cell.

Such a medium-to-large-sized battery module is preferably applied as a power source for a device that requires high output and high capacity, such as electric vehicles, hybrid electric vehicles, a system for storing electric power, and the like.

Hereinafter, the present invention will be described in detail with reference to Examples so that those skilled in the art can easily carry out the present invention. However, the present invention may be embodied in several different forms, and therefore, is not limited to Examples described herein.

## Examples

### Example 1: Production of negative electrode

<Preparation of conductive material solution>

Second carboxymethylcellulose (weight-average molecular weight ($M_w$): 500,000) was added to water and then SWCNT monomers were added to the second carboxymethylcellulose such that a weight ratio of the SWCNT monomers and the second carboxymethylcellulose was 40:60 to prepare a conductive material solution. The conductive material solution was dispersed and stirred for 12 hours using an ultrasonic disperser to prepare a SWCNT aggregate, which is a secondary structure in which the SWCNT monomers were agglomerated or aggregated.

The SWCNT aggregates and the second carboxymethylcellulose were comprised in the conductive material solution prepared above, and the SWCNT aggregates were comprised at 0.4 wt% and the second carboxymethylcellulose was comprised at 0.6 wt%, based on a total weight of a solid content of the conductive material solution. The solid content of the conductive material solution was 1 wt% based on a total weight of the solution.

<Production of negative electrode>

A mixture of a silicon-based active material (e.g., SiO, an average particle diameter ($D_{50}$): 5 $\mu$m) and a carbon-based active material (e.g., natural graphite, an average particle diameter ($D_{50}$): 20 $\mu$m) in a weight ratio of 15:85 was prepared as a negative electrode active material.

The negative electrode active material, styrene-butadiene rubber (SBR) serving as a binder, the conductive material solution prepared above, and first carboxymethylcellulose (weight-average molecular weight ($M_w$): 1,1000,000) were added to water serving as a first solvent to prepare a negative electrode slurry.

The negative electrode active material, the SWCNT aggregates in the conductive material solution, the negative electrode binder, the first carboxymethylcellulose, and the second carboxymethylcellulose in the conductive material solution were comprised in a weight ratio of 97.95:0.02: 1: 1:0.03 in the negative electrode slurry (solid content: 50 wt%). The SWCNT aggregates were comprised in a weight ratio of 0.14 parts by weight based on 100 parts by weight of the silicon-based active material in the negative electrode slurry.

The negative electrode slurry was applied in a loading amount of 3 mAh/cm$^2$ onto one surface of a copper current collector (thickness: 15 $\mu$m) as a negative electrode current collector, roll-pressed, and dried in a 130 °C vacuum oven for 10 hours to form a negative electrode active material layer (thickness: 42 $\mu$m), and the resultant was used as a negative electrode (thickness: 57 $\mu$m, area: 1.4875 cm$^2$, and circular shape) according to Example 1.

### Examples 2 to 7 and Comparative Examples 1 to 4: Production of negative electrodes

Negative electrodes according to Examples 2 to 6 and Comparative Examples 2 to 4 were produced in the same manner as in Example 1 except that a negative electrode slurry or a composition in the negative electrode was adjusted as shown in Table 1 below.

A negative electrode in Example 7 was produced in the same manner as in Example 1 except that a silicon-carbon composite (Si-C composite) (average particle diameter ($D_{50}$): 10 $\mu$m) was used instead of the silicon-based active material (SiO) in Example 1. The silicon-carbon composite is a composite in which a carbon-based material is dispersed between silicon (Si). The carbon-based material comprises graphite and amorphous carbon in a weight ratio of 2:1. The silicon-carbon composite comprises silicon and the carbon-based material in a weight ratio of 40:60.

A negative electrode in Comparative Example 1 was produced in the same manner as in Example 1 except that MWCNT monomers instead of the SWCNT monomers were added to a conductive material solution.

[Table 1]

| | Negative electrode active material | | CNT aggregate | | | Binder | | First carboxymethylcellulose | | Second carboxymethylcellulose | |
|---|---|---|---|---|---|---|---|---|---|---|---|
| | Weight ratio of carbon-based active material and silicon-based active material | Amount (wt%) | Type | Amount (wt%) | Amount based on 100 parts by weight of silicon-based active material (parts by weight) | Type | Amount (wt%) | Weight-average molecular weight $(M_w)$ | Amount (wt%) | Weight-average molecular weight $(M_w)$ | Amount (wt%) |
| Example 1 | 85:15 | 97.95 | SWCNT aggregate | 0.02 | 0.14 | SBR | 1 | 1,100,000 | 1 | 500,000 | 0.03 |
| Example 2 | 85:15 | 97.875 | SWCNT aggregate | 0.05 | 0.34 | SBR | 1 | 1,100,000 | 1 | 500,000 | 0.075 |
| Example 3 | 85:15 | 97.975 | SWCNT aggregate | 0.01 | 0.07 | SBR | 1 | 1,100,000 | 1 | 500,000 | 0.015 |
| Example 4 | 85:15 | 97.95 | SWCNT aggregate | 0.02 | 0.14 | SBR | 1 | 1,100,000 | 1 | 400,000 | 0.03 |
| Example 5 | 85:15 | 97.95 | SWCNT aggregate | 0.02 | 0.14 | SBR | 1 | 1,100,000 | 1 | 700,000 | 0.03 |
| Example 6 | 85:15 | 97.95 | SWCNT aggregate | 0.02 | 0.14 | SBR | 1 | 1,100,000 | 1 | 1,100,000 | 0.03 |

(continued)

| | Negative electrode active material | | CNT aggregate | | | Binder | | First carboxymethylcellulose | | Second carboxymethylcellulose | |
|---|---|---|---|---|---|---|---|---|---|---|---|
| | Weight ratio of carbon-based active material and silicon-based active material | Amount (wt%) | Type | Amount (wt%) | Amount based on 100 parts by weight of silicon-based active material (parts by weight) | Type | Amount (wt%) | Weight-average molecular weight ($M_w$) | Amount (wt%) | Weight-average molecular weight ($M_w$) | Amount (wt%) |
| Example 7 | 85:15 | 97.95 | SWCNT aggregate | 0.02 | 0.14 | SBR | 1 | 1,100,000 | 1 | 500,000 | 0.03 |
| Comparative Example 1 | 85:15 | 97.95 | MWCNT aggregate | 0.02 | 0.14 | SBR | 1 | 1,100,000 | 1 | 500,000 | 0.03 |
| Comparative Example 2 | 85:15 | 97.9875 | SWCNT aggregate | 0.005 | 0.03 | SBR | 1 | 1,100,000 | 1 | 500,000 | 0.0075 |
| Comparative Example 3 | 85:15 | 97.85 | SWCNT aggregate | 0.06 | 0.41 | SBR | 1 | 1,100,000 | 1 | 500,000 | 0.09 |
| Comparative Example 4 | 0:100 | 97.95 | SWCNT aggregate | 0.02 | 0.02 | SBR | 1 | 1,100,000 | 1 | 500,000 | 0.03 |

Experimental Example 1: Measurement of average diameter, average length, and average aspect ratio of CNT aggregates

An average diameter, average length, and average aspect ratio of CNT aggregates (SWCNT aggregates or MWCNT aggregates) were measured.

The average diameter, average length, and average aspect ratio of the CNT aggregates were measured with the following methods, and results of the measurement are shown in Table 2 below.

1) Average diameter

The average diameter of the CNT aggregates was measured with the following method. Each of the conductive material solutions prepared in Examples 1 to 7 and Comparative Examples 1 to 4 was diluted 1,000x in water. One drop of the diluted solution was dropped on a TEM grid and the TEM grid was dried. The dried TEM grid was observed via TEM equipment (H7650 manufactured by Hitachi High-Tech Corporation) and the average diameter of the CNT aggregates was measured.

2) Average length

The average length of the CNT aggregates was measured in the following method. Each of the conductive material solutions prepared in Examples 1 to 7 and Comparative Examples 1 to 4 was diluted 1,000x in water. Afterward, 20 ml of the diluted solution was filtered through a filter, and the filter through which the SWCNT aggregates were filtered was dried. One hundred scanning electron microscope (SEM) images were taken of the dried filter, the length of the SWCNT aggregates was measured using an ImageJ program, and an average value of the measured length was defined as the average length of the SWCNT aggregates.

3) Average aspect ratio

The average aspect ratio of the CNT aggregates was defined as "the average length of the SWCNT aggregate/the average diameter of the SWCNT aggregates."

[Table 2]

| | | CNT aggregate | | |
|---|---|---|---|---|
| | Type | Average diameter (nm) | Average length (μm) | Average aspect ratio |
| Example 1 | SWCNT aggregate | 8.1 | 8.2 | 1012 |
| Example 2 | SWCNT aggregate | 8.5 | 8.1 | 953 |
| Example 3 | SWCNT aggregate | 8.3 | 8.6 | 1036 |
| Example 4 | SWCNT aggregate | 7.3 | 7.6 | 1041 |
| Example 5 | SWCNT aggregate | 10.5 | 9.1 | 867 |
| Example 6 | SWCNT aggregate | 13.1 | 12.6 | 962 |
| Example 7 | SWCNT aggregate | 8.1 | 8.2 | 1012 |
| Comparative Example 1 | MWCNT aggregate | 20.1 | 2.4 | 119 |
| Comparative Example 2 | SWCNT aggregate | 7.9 | 8.1 | 1025 |
| Comparative Example 3 | SWCNT aggregate | 8 | 8.4 | 1050 |
| Comparative Example 4 | SWCNT aggregate | 8.1 | 8.2 | 1012 |

Referring to Table 2, it can be seen that the SWCNT aggregates used in Examples 1 to 3 and 7 have a desirable level of average diameter and average length and, accordingly, a conductive network may be formed in the negative electrode.

In the case of Example 4, it can be seen that a molecular weight of the second carboxymethylcellulose used in the conductive material solution was slightly low so that a degree of aggregation of the SWCNT monomers was slightly lower than that in Example 1. In the case of Example 5 and Example 6, it can be seen that a molecular weight of the second carboxymethylcellulose used in the conductive material solution was slightly high so that a degree of aggregation of the SWCNT monomers was slightly higher than that in Example 1.

In the case of Comparative Example 1, since MWCNT aggregates were used, an average length was much shorter than that of the SWCNT aggregates in the other examples. Therefore, it can be predicted that the MWCNT aggregates in the negative electrode according to Comparative Example 1 will not be able to smoothly form a conductive network that aids electrical connection between the negative electrode active materials.

In the case of Comparative Examples 2 and 3, it can be seen that, although SWCNT aggregates at a similar level to the SWCNT aggregates in Examples were used, the content of the SWCNT aggregates were insufficient or excessive as described below, resulting in degradation of lifetime characteristics.

In the case of Comparative Example 4, it can be seen that, although SWCNT aggregates at a similar level to the SWCNT aggregates in Examples was used, since only the silicon-based active material was used as the negative electrode active material, the degradation of the lifetime of the silicon-based active material may not be sufficiently prevented.

Experimental Example 2: Evaluation of lifetime characteristics

<Production of secondary battery>

As a positive electrode, a circular lithium metal thin film having an area of 1.7671 cm$^2$ was used.

A porous polyethylene separator was interposed between the negative electrode produced in Example 1 and the positive electrode, and an electrolyte solution was injected to produce a coin-type half-cell secondary battery.

The electrolyte was prepared by dissolving 0.5 wt% of vinylene carbonate (VC) in a solution in which ethyl methyl carbonate (EMC) and ethylene carbonate (EC) were mixed in a volume ratio of 30:70 and dissolving $LiPF_6$ at a concentration of 1 M.

A secondary battery was produced in the same manner as in Example 1 by using each of the negative electrodes produced in Examples 2 to 7 and Comparative Examples 1 to 4.

<Evaluation of capacity retention rate>

The cycle capacity retention rates of the secondary batteries according to Examples 1 to 7 and Comparative Examples 1 to 4 were evaluated using an electrochemical charging/discharging device.

The cycle capacity retention rates were measured by charging and discharging the secondary batteries under conditions of charging/discharging at 0.1 C at first and second cycles and 0.5 C from a third cycle (charging conditions: CC/CV, 5 mV/0.005 C cut-off, and discharging conditions: CC, 1.0 V cut off).

The capacity retention rate was calculated as follows.

$$\text{Capacity retention rate (\%)} = \{(\text{Discharge capacity at N}^{th}\text{ cycle}) / (\text{Discharge capacity at 1}^{st}\text{ cycle})\} \times 100$$

(In Equation 2, N is an integer greater than or equal to 1)

The 100$^{th}$ cycle capacity retention rates (%) are shown in Table 3.

[Table 3]

| | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|
| 100$^{th}$-cycle capacity retention rate (%) | 85.2 | 82.1 | 81.6 | 81.8 | 82.1 | 75.6 | 85.0 | 62.7 | 65.1 | 73.1 | 50.9 |

Referring to Table 3, it can be seen that the secondary batteries according to the examples in which the SWCNT aggregates are comprised in a preferred content have an excellent capacity retention rate compared to the secondary batteries according to the comparative examples.

## Claims

1.  A negative electrode comprising:

    a negative electrode current collector; and
    a negative electrode active material layer formed on the negative electrode current collector and comprising a negative electrode active material containing a silicon-based active material and a carbon-based active material, a binder, and single-walled carbon nanotube aggregates,
    wherein the silicon-based active material comprises at least one selected from the group consisting of a silicon-based oxide and a silicon-carbon composite,
    wherein the single-walled carbon nanotube aggregates are comprised at 0.05 parts by weight to 0.37 parts by weight based on 100 parts by weight of the silicon-based active material in the negative electrode active material layer.

2.  The negative electrode of claim 1, wherein the single-walled carbon nanotube aggregate is a secondary structure formed by aggregating two or more single-walled carbon nanotube monomers.

3.  The negative electrode of claim 1, wherein the carbon-based active material is at least one selected from the group consisting of artificial graphite, natural graphite, hard carbon, soft carbon, carbon black, acetylene black, Ketjen black, Super P, graphene, and fibrous carbon.

4.  The negative electrode of claim 1, wherein the single-walled carbon nanotube aggregates are comprised at 0.008 wt% to 0.055 wt% in the negative electrode active material layer.

5.  The negative electrode of claim 1, wherein the negative electrode active material comprises the silicon-based active material and the carbon-based active material in a weight ratio of 1:99 to 30:70.

6.  The negative electrode of claim 1, wherein the negative electrode active material is comprised at 70 to 99 wt% in the negative electrode active material layer.

7.  The negative electrode of claim 1, wherein the single-walled carbon nanotube aggregates have an average length of 3 $\mu$m to 20 $\mu$m.

8.  The negative electrode of claim 1, wherein the single-walled carbon nanotube aggregates have an average diameter of 3 nm to 20 nm.

9.  The negative electrode of claim 1, wherein the negative electrode active material layer further comprises a thickener, wherein the thickener comprises first carboxymethylcellulose having a weight-average molecular weight of 800,000 to 1,600,000 and second carboxymethylcellulose having a weight-average molecular weight of 350,000 to 750,000.

10. The negative electrode of claim 9, wherein the first carboxymethylcellulose and the second carboxymethylcellulose are comprised in a weight ratio of 12:1 to 100:1 in the negative electrode active material layer.

11. The negative electrode of claim 9, wherein the thickener is comprised at 0.5 to 5 wt% in the negative electrode active material layer.

12. A method of producing a negative electrode according to any of the preceding claims, the method comprising the steps of:

    adding and mixing a negative electrode active material comprising a silicon-based active material and a carbon-based active material, a binder, single-walled carbon nanotube aggregates, and first carboxymethylcellulose having a weight-average molecular weight of 800,000 to 1,600,000 to a first solvent and preparing a negative electrode slurry; and

coating a negative electrode current collector with the negative electrode slurry and drying the negative electrode slurry,

wherein the single-walled carbon nanotube aggregates are mixed at 0.05 to 0.37 parts by weight based on 100 parts by weight of the silicon-based active material, and wherein the silicon-based active material comprises at least one selected from the group consisting of a silicon-based oxide and a silicon-carbon composite

**13.** The method of claim 12, wherein the single-walled carbon nanotube aggregates are prepared by mixing single-walled carbon nanotube monomers with a conductive material solution comprising second carboxymethylcellulose having a weight-average molecular weight of 350,000 to 750,000 and a second solvent, wherein the conductive material solution is added to the first solvent.

**14.** A secondary battery comprising:

the negative electrode according to Claim 1;
a positive electrode disposed to face the negative electrode;
a separator interposed between the negative electrode and the positive electrode; and
an electrolyte.

**Patentansprüche**

**1.** Negative Elektrode, die folgendes umfasst:

einen Negativelektrodenstromkollektor; und
eine Negativelektrodenaktivmaterialschicht, die auf dem Negativelektrodenstromkollektor ausgebildet ist und ein Negativelektrodenaktivmaterialumfasst, das ein Aktivmaterial auf Siliziumbasis und ein Aktivmaterial auf Kohlenstoffbasis, ein Bindemittel und einwandige Kohlenstoff-Nanoröhren-Aggregate enthält,
wobei das Aktivmaterial auf Siliziumbasis mindestens eines umfasst, ausgewählt aus der Gruppe bestehend aus einem Oxid auf Siliziumbasis und einem Silizium-Kohlenstoff-Komposit,
wobei die einwandigen Kohlenstoff-Nanoröhren-Aggregate zu 0,05 Gewichtsteilen bis 0,37 Gewichtsteilen, bezogen auf 100 Gewichtsteile des Aktivmaterials auf Siliziumbasis, in der Negativelektrodenaktivmaterialschicht umfasst sind.

**2.** Negative Elektrode nach Anspruch 1, wobei das einwandige Kohlenstoff-Nanoröhren-Aggregat eine Sekundärstruktur ist, die durch Aggregation von zwei oder mehr einwandigen Kohlenstoff-Nanoröhren-Monomeren ausgebildet ist.

**3.** Negative Elektrode nach Anspruch 1, wobei das Aktivmaterial auf Kohlenstoffbasis mindestens eines ist, ausgewählt aus der Gruppe bestehend aus künstlichem Graphit, natürlichem Graphit, hartem Kohlenstoff, weichem Kohlenstoff, Ruß, Acetylenschwarz, Ketjenschwarz, Super P, Graphen und faserigem Kohlenstoff.

**4.** Negative Elektrode nach Anspruch 1, wobei die einwandigen Kohlenstoff-Nanoröhren-Aggregate zu 0,008 Gew.-% bis 0,055 Gew.-% in der Negativelektrodenaktivmaterialschicht umfasst sind.

**5.** Negative Elektrode nach Anspruch 1, wobei das Negativelektrodenaktivmaterial das Aktivmaterial auf Siliziumbasis und das Aktivmaterial auf Kohlenstoffbasis in einem Gewichtsverhältnis von 1:99 bis 30:70 umfasst.

**6.** Negative Elektrode nach Anspruch 1, wobei das Negativelektrodenaktivmaterial zu 70 bis 99 Gew.-% in der Negativelektrodenaktivmaterialschicht umfasst ist.

**7.** Negative Elektrode nach Anspruch 1, wobei die einwandigen Kohlenstoff-Nanoröhren-Aggregate eine durchschnittliche Länge von 3 $\mu$m bis 20 $\mu$m aufweisen.

**8.** Negative Elektrode nach Anspruch 1, wobei die einwandigen Kohlenstoff-Nanoröhren-Aggregate einen durchschnittlichen Durchmesser von 3 nm bis 20 nm aufweisen.

**9.** Negative Elektrode nach Anspruch 1, wobei die Negativelektrodenaktivmaterialschicht ferner ein Verdickungsmittel umfasst,
wobei das Verdickungsmittel erste Carboxymethylcellulose mit einem gewichtsmittleren Molekulargewicht von 800.000 bis 1.600.000 und eine zweite Carboxymethylcellulose mit einem gewichtsmittleren Molekulargewicht von 350.000 bis 750.000 umfasst.

10. Negative Elektrode nach Anspruch 9, wobei die erste Carboxymethylcellulose und die zweite Carboxymethylcellulose in einem Gewichtsverhältnis von 12:1 bis 100:1 in der Negativelektrodenaktivmaterialschicht umfasst sind.

11. Negative Elektrode nach Anspruch 9, wobei das Verdickungsmittel zu 0,5 bis 5 Gew.-% in der Negativelektrodenaktivmaterialschicht umfasst ist.

12. Verfahren zur Herstellung einer negativen Elektrode gemäß mindestens einem der vorhergehenden Ansprüche, wobei das Verfahren die folgenden Schritte umfasst:

Hinzufügen und Mischen eines Negativelektrodenaktivmaterials, das ein Aktivmaterial auf Siliziumbasis und ein Aktivmaterial auf Kohlenstoffbasis umfasst, eines Bindemittels, einwandiger Kohlenstoff-Nanoröhren-Aggregate und einer ersten Carboxymethylcellulose mit einem gewichtsmittleren Molekulargewicht von 800.000 bis 1.600.000 zu einem ersten Lösungsmittel, und Herstellen einer Negativelektrodenaufschlämmung; und Beschichten eines Negativelektrodenstromkollektors mit der Negativelektrodenaufschlämmung und Trocknen der Negativelektrodenaufschlämmung, wobei die einwandigen Kohlenstoff-Nanoröhren-Aggregate zu 0,05 bis 0,37 Gewichtsteilen, bezogen auf 100 Gewichtsteile des Aktivmaterials auf Siliziumbasis, gemischt werden, und wobei das Aktivmaterial auf Siliziumbasis mindestens einen Vertreter, ausgewählt aus der Gruppe bestehend aus einem Oxid auf Siliziumbasis und einem Silizium-Kohlenstoff-Komposit, umfasst.

13. Verfahren nach Anspruch 12, bei dem die einwandigen Kohlenstoff-Nanoröhren-Aggregate durch Mischen von einwandigen Kohlenstoff-Nanoröhren-Monomeren mit einer leitfähigen Materiallösung, die eine zweite Carboxymethylcellulose mit einem gewichtsmittleren Molekulargewicht von 350.000 bis 750.000 und ein zweites Lösungsmittel umfasst, hergestellt werden, wobei die leitfähige Materiallösung dem ersten Lösungsmittel zugesetzt wird.

14. Sekundärbatterie, umfassend:

die negative Elektrode gemäß Anspruch 1; eine positive Elektrode, die so angeordnet ist, dass sie der negativen Elektrode gegenüberliegt; einen Separator, der zwischen der negativen Elektrode und der positiven Elektrode angeordnet ist; und einen Elektrolyten.

**Revendications**

1. Électrode négative comprenant :

un collecteur de courant d'électrode négative ; et une couche de matériau actif d'électrode négative formée sur le collecteur de courant d'électrode négative et comprenant un matériau actif d'électrode négative contenant un matériau actif à base de silicium et un matériau actif à base de carbone, un liant, et des agrégats de nanotubes de carbone à paroi unique, dans laquelle le matériau actif à base de silicium comprend au moins un choisi dans le groupe constitué d'un oxyde à base de silicium et d'un composite silicium-carbone, dans laquelle les agrégats de nanotubes de carbone à paroi unique sont compris entre 0,05 partie en poids à 0,37 partie en poids sur la base de 100 parties en poids du matériau actif à base de silicium dans la couche de matériau actif d'électrode négative.

2. Électrode négative selon la revendication 1, dans laquelle l'agrégat de nanotubes de carbone à paroi unique est une structure secondaire formée par l'agrégation de deux monomères ou plus de nanotubes de carbone à paroi unique.

3. Électrode négative selon la revendication 1, dans laquelle le matériau actif à base de carbone est au moins un choisi dans le groupe constitué du graphite artificiel, du graphite naturel, du carbone dur, du carbone mou, du noir de carbone, du noir d'acétylène, du noir de Ketjen, du Super P, du graphène, et du carbone fibreux.

**4.** Électrode négative selon la revendication 1, dans laquelle les agrégats de nanotubes de carbone à paroi unique sont compris entre 0,008 % en poids et 0,055 % en poids dans la couche de matériau actif d'électrode négative.

**5.** Électrode négative selon la revendication 1, dans laquelle le matériau actif d'électrode négative comprend le matériau actif à base de silicium et le matériau actif à base de carbone dans un rapport pondéral de 1:99 à 30:70.

**6.** Électrode négative selon la revendication 1, dans laquelle le matériau actif d'électrode négative est compris entre 70 et 99 % en poids dans la couche de matériau actif d'électrode négative.

**7.** Électrode négative selon la revendication 1, dans laquelle les agrégats de nanotubes de carbone à paroi unique présentent une longueur moyenne de 3 $\mu$m à 20 $\mu$m.

**8.** Électrode négative selon la revendication 1, dans laquelle les agrégats de nanotubes de carbone à paroi unique présentent un diamètre moyen de 3 nm à 20 nm.

**9.** Électrode négative selon la revendication 1, dans laquelle la couche de matériau actif d'électrode négative comprend en outre un épaississant,
dans laquelle l'épaississant comprend une première carboxyméthylcellulose présentant un poids moléculaire moyen en poids de 800 000 à 1 600 000 et une seconde carboxyméthylcellulose présentant un poids moléculaire moyen en poids de 350 000 à 750 000.

**10.** Électrode négative selon la revendication 9, dans laquelle la première carboxyméthylcellulose et la seconde carboxyméthylcellulose sont comprises dans un rapport pondéral de 12:1 à 100:1 dans la couche de matériau actif d'électrode négative.

**11.** Électrode négative selon la revendication 9, dans laquelle l'épaississant est compris entre 0,5 et 5 % en poids dans la couche de matériau actif d'électrode négative.

**12.** Procédé de production d'une électrode négative selon l'une quelconque des revendications précédentes, le procédé comprenant les étapes suivante :

ajouter et mélanger un matériau actif d'électrode négative comprenant un matériau actif à base de silicium et un matériau actif à base de carbone, un liant, des agrégats de nanotubes de carbone à paroi unique, et une première carboxyméthylcellulose présentant un poids moléculaire moyen en poids de 800 000 à 1 600 000 à un premier solvant et préparer une suspension d'électrode négative ; et
revêtir un collecteur de courant d'électrode négative avec la suspension d'électrode négative et sécher la suspension d'électrode négative,
dans lequel les agrégats de nanotubes de carbone à paroi unique sont mélangés à raison de 0,05 à 0,37 partie en poids pour 100 parties en poids du matériau actif à base de silicium, et dans lequel le matériau actif à base de silicium comprend au moins un choisi dans le groupe constitué d'un oxyde à base de silicium et d'un composite silicium-carbone.

**13.** Procédé selon la revendication 12, dans lequel les agrégats de nanotubes de carbone à paroi unique sont préparés en mélangeant des monomères de nanotubes de carbone à paroi unique avec une solution de matériau conducteur comprenant une seconde carboxyméthylcellulose présentant un poids moléculaire moyen en poids de 350 000 à 750 000 et un second solvant,
dans lequel la solution de matériau conducteur est ajoutée au premier solvant.

**14.** Batterie secondaire comprenant :

l'électrode négative selon la revendication 1;
une électrode positive disposée pour faire face à l'électrode négative ;
un séparateur interposé entre l'électrode négative et l'électrode positive ; et
un électrolyte.

**EP 3 968 406 B1**

## REFERENCES CITED IN THE DESCRIPTION

### Patent documents cited in the description

- KR 1020190095020
- KR 1020170074030
- KR 20150121694 A